(19) Europäisches Patentamt
European Patent Office
Office européen des brevets

(11) **EP 2 292 817 B1**

(12) **EUROPEAN PATENT SPECIFICATION**

(45) Date of publication and mention
of the grant of the patent:
**14.11.2012 Bulletin 2012/46**

(21) Application number: **10174831.7**

(22) Date of filing: **01.09.2010**

(51) Int Cl.:
*D02G 1/14* *(2006.01)*    *B01D 39/10* *(2006.01)*
*B21F 1/04* *(2006.01)*    *D02G 3/12* *(2006.01)*
*F23D 14/14* *(2006.01)*    *F23D 14/16* *(2006.01)*
*B01D 39/12* *(2006.01)*    *B21F 27/18* *(2006.01)*
*B21F 45/00* *(2006.01)*    *F23D 14/46* *(2006.01)*

(54) **Woven or knitted fabric prepared from a concave-convex patterned metal fiber yarn**

Gewebe or Gestrike aus Konkav-konvex strukturiertem Metallfaserngarn

Tissu tissé ou tricoté à partir d'un fil métallique ayant des motifs concaves et convexes

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **04.09.2009 KR 20090083549**

(43) Date of publication of application:
**09.03.2011 Bulletin 2011/10**

(73) Proprietor: **Green Fire Co., Ltd.**
**Eumseong-gun**
**Chungcheongbuk-do 369833 (KR)**

(72) Inventor: **Suk, Chang Hwan**
**SEODAEMUN-GU, SEOUL 120-788 (KR)**

(74) Representative: **Bongiovanni, Simone**
**Studio Torta S.p.A.**
**Via Viotti, 9**
**10121 Torino (IT)**

(56) References cited:
**EP-A1- 0 280 340**    **EP-A2- 1 681 378**
**WO-A2-02/22922**    **DE-U- 7 521 192**
**JP-A- 9 049 124**

**Description**

## BACKGROUND OF THE INVENTION

**Field of the Invention**

The present invention relates to a woven or knitted fabric prepared from a metal fiber having concave-convex patterns, in which frictional force between metal fibers, entanglement and processability are improved.

## Description of the Related Art

As a filter material and a burner material, a metal fiber fabric has been used in view of durability and heat resistance. Meanwhile, a metal fiber fabric has been prepared using a metal fiber bundle or yarn made of heat-resistant metal fibers or ceramic fibers.

As a conventional art related to a metal fiber yarn, PCT Patent Application No. WO 01/079759 discloses a yarn including a machined metal fiber bundle surrounded by polymer or natural fibers and consolidated with a binding agent, a fabric including the yarn, and a method for manufacturing a gas burner membrane. The method for manufacturing the gas burner membrane includes preparing a fabric and removing a binding agent, polymer or natural fibers from the fabric. As in the case of this PCT patent application, the method for manufacturing the yarn surrounded by the binding agent and the polymer or natural fibers is widely used when preparing a yarn from a machined metal fiber.

PCT Patent Application No. WO 97/04152 also discloses a textile fabric and a gas burner membrane made of the textile fabric. Machined metal filaments having a diameter of 15-150$\mu$m are consolidated by a binding agent to form a nearly parallel filament bundle, and the consolidated bundle is woven, knitted or braided to prepare the textile fabric.

U.S. Patent Nos. 4,930,199 and 5,071,713 disclose a yarn which is prepared by surrounding a machined metal fiber with polymer or natural fibers. However, such a yarn cannot be drawn more than the elongation of the polymer. In this regard, there is a limitation on thinning the thickness of the yarn, and it is difficult to manufacture a porous material having finer pores.

Meanwhile, Korean Patent No. 613869 discloses a metal fiber yarn prepared by combing metal fibers which are formed by a melt extraction process and in which orientations are randomly distributed, a fabric prepared from the metal fiber yarn, and a use of the metal fiber yarn as a membrane for a surface combustion burner. According to this patent, the metal fiber yarn is prepared by the entanglement of the metal fibers by means of surface protrusions which are naturally formed on the surfaces of the metal fibers during the process of preparing the metal fibers by the melt extraction process. However, when the metal fibers are prepared by the melt extraction process, there is a limitation on the frictional force of the metal fibers due to the surface protrusions formed on the surfaces of the metal fibers. Therefore, it is difficult to prepare a yarn, one strand of which consists of a smaller number of metal fibers, specifically, less than fifty metal fibers. Moreover, the metal fiber yarn prepared from a large number of metal fibers, such as the above has a problem in that it is difficult to prepare a fabric having lower-density, uniform and fine pores.

## SUMMARY OF THE INVENTION

An aspect of the present invention provides woven or knitted fabric prepared from a metal fiber, in which frictional force between metal fibers, entanglement and processability are improved, and a metal fiber yarn including the same.

An aspect of the present invention also provides a woven or knitted fabric prepared from a metal fiber fabric prepared from the metal fabric yarn and having more uniform and finer pores.

An aspect of the present invention also provides a filter material and a burner material which are made of the metal fiber fabric.

According to the present invention, there is a woven or knitted fabric prepared from a metal fiber yarn including a metal fiber having concave-convex patterns formed at intervals of 0.3-50mm in a longitudinal direction of the metal fiber and drawn and the metal fiber yarn has a length of 0.45 m to 10.0m per gram.

## BRIEF DESCRIPTION OF THE DRAWINGS

The above and other aspects, features and other advantages of the present invention will be more clearly understood from the following detailed description taken in conjunction with the accompanying drawings, in which:

FIG. 1 illustrates a method for manufacturing a metal fiber in which concave-convex patterns are formed using a spur gear;

FIG. 2A is a top sectional view of the metal fiber having the concave-convex patterns formed by passing through the spur gear;

FIG. 2B is a side view of the metal fiber having the concave-convex patterns formed by passing through the spur gear;

FIG. 2C is a perspective view of the metal fiber having the concave-convex patterns formed by passing through the spur gear;

FIG. 3 illustrates a method for manufacturing a metal fiber in which concave-convex patterns are formed using a helical gear;

FIG. 4A is a top sectional view of the metal fiber having the concave-convex patterns formed by passing through the helical gear;

FIG. 4B is a side view of the metal fiber having the concave-convex patterns formed by passing through the helical gear;

FIG. 4C is a perspective view of the metal fiber having the concave-convex patterns formed by passing through the helical gear;

FIG. 5 is a SEM image (magnification (X) : 500) showing the surface of a metal fiber manufactured by a cutting process or a drawing process;

FIG. 6 is a SEM image (magnification (X) : 500) showing the side surface of a metal fiber manufactured by a melt extraction process;

FIG. 7A is an image showing a fabric prepared from yarns having 100 strands of fibers with a diameter of 30$\mu$m (number of yarns: 20/2.54cm);

FIG. 7B is an image showing a fabric prepared from yarns (FIG. 3B) having 200 strands of fibers with a diameter of 20$\mu$m (number of yarns: 20/2.54cm);

FIG. 8 illustrates a metal fiber yarn;

FIG. 9 is an image showing a fabric prepared by weaving the metal fiber yarn according to the embodiment of the present invention;

FIG. 10 is an image showing a fabric prepared by knitting the metal fiber yarn according to the embodiment of the present invention;

FIG. 11A illustrates the bottom surface of a fabric having flame holes according to an embodiment of the present invention;

FIG. 11B illustrates the top surface of the fabric having flame holes according to the embodiment of the present invention;

FIG. 12A illustrates a fabric including metal wires as a part of warp;

FIG. 12B illustrates a fabric including metal wires as a part of weft;

FIG. 13 schematically illustrates a drawing process of a metal fiber;

FIG. 14 is an image showing a surface combustion burner using membranes prepared from yarns of example 12 and comparative example 12;

FIG. 15A is an image showing the lowest load state of the membrane prepared from the yarn of example 12;

FIG. 15B is an image showing the highest load state of the membrane prepared from the yarn of example 12;

FIG. 16A is an image showing the lowest load state of the membrane prepared from the yarn of comparative example 12; and

FIG. 16B is an image showing the highest load state of the membrane prepared from the yarn of comparative example 12.

## DETAILED DESCRIPTION OF THE PREFERRED EMBODIMENT

Exemplary embodiments of the present invention will now be described in detail with reference to the accompanying drawings.

An aspect of the present invention provides a woven or knitted fabric prepared from a metal fiber in which concave-convex patterns are formed in a longitudinal direction of the metal fiber at regular intervals, specifically, at intervals of from 0.3mm to 50mm.

In order to obtain the uniform frictional force between metal fibers and excellent and high porosity in a yarn and a fabric including the metal fibers, it is preferable that the concave-convex patterns are formed at the regular intervals along the longitudinal direction of the metal fiber. That is, the concave-convex patterns may be repeated at intervals of from 0.3mm to 50mm along the longitudinal direction of the metal fiber.

The concave-convex patterns of the metal fiber may be formed at intervals of 0.3 mm -50mm, specifically 0.3 mm -30mm, more specifically 0.5 mm -18mm.

If the concave-convex patterns are formed at intervals of less than 0.3mm, a large number of concave-convex patterns are formed to increase the frictional force between the metal fibers and therefore a stable drawing is impossible. If the concave-convex patterns are formed at intervals of more than 50mm, the frictional force between the metal fibers and the entanglement are insufficient and therefore the metal fibers may be released from the metal fiber yarn.

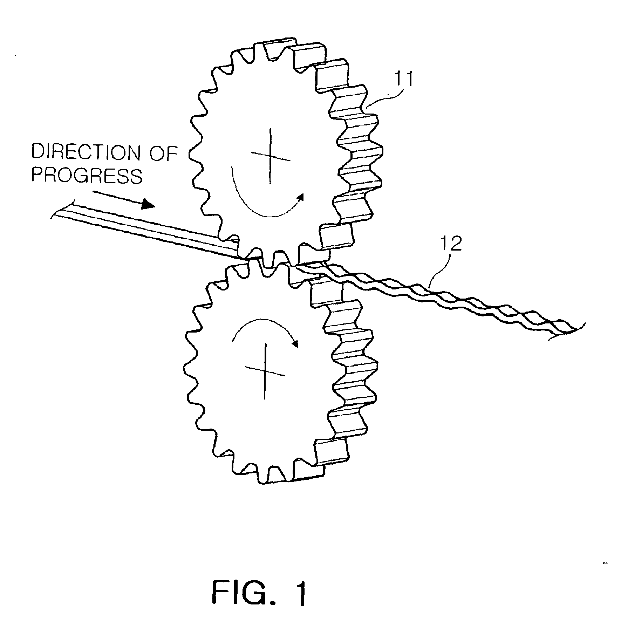

The concave-convex patterns may be formed by passing a metal fiber bundle through a gear. There is no special limitation on the types of the gear, and the concave-convex patterns may be formed in any kind of metal fibers. Also, there is no special limitation on the number of metal fibers included in the metal fiber bundle which is to be passed through the gear to form the concave-convex patterns thereon in the longitudinal direction of the metal fibers. FIGS. 1 through 4 illustrate a method for forming concave-convex patterns on metal fibers by passing a metal fiber bundle through a gear, and the metal fiber bundle on which the concave-convex patterns are formed.

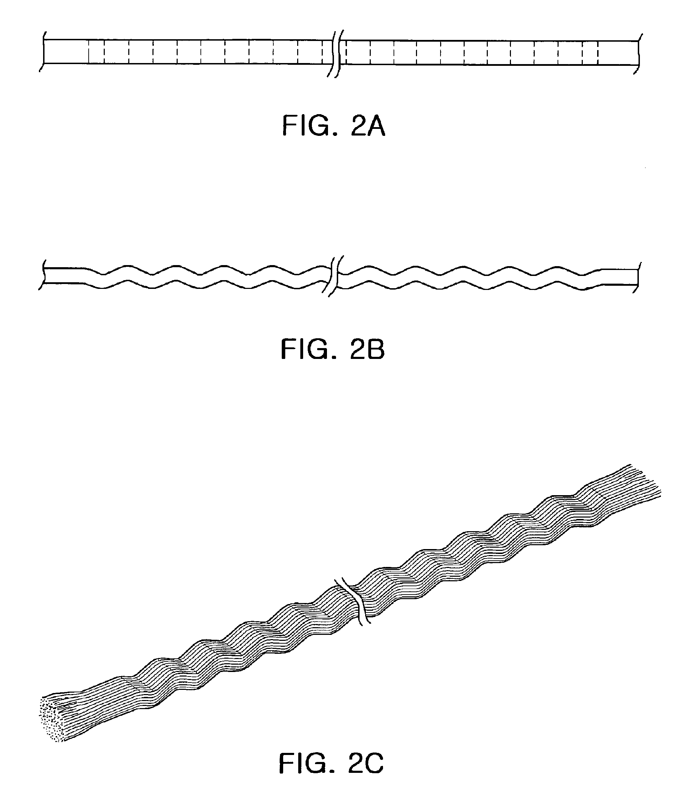

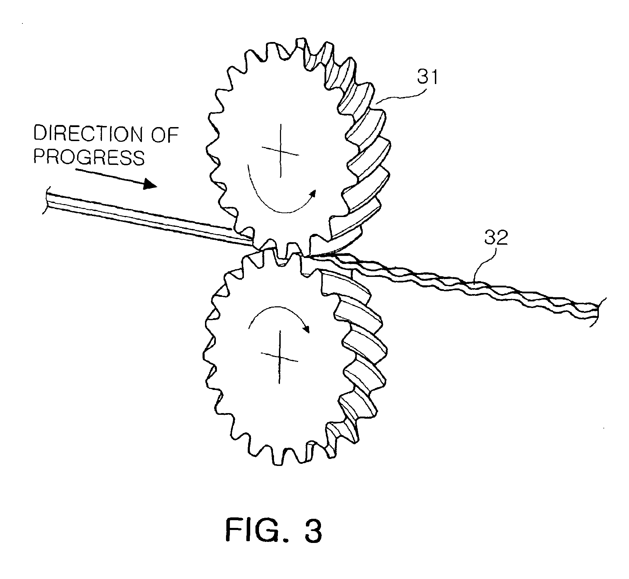

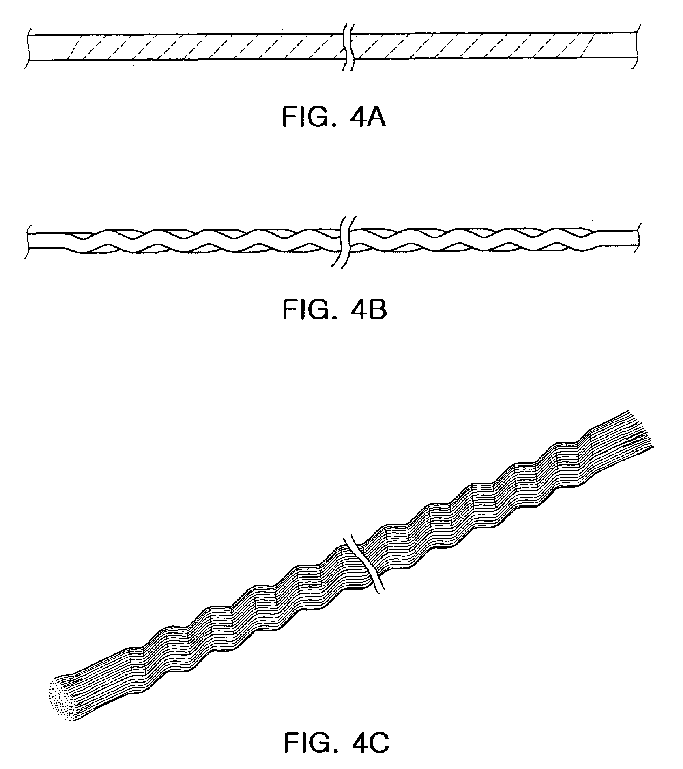

The concave-convex patterns may be formed on the metal fibers by passing the metal fiber bundle through a spur gear as illustrated in FIG. 1, or by passing the metal fiber bundle through a helical gear as illustrated in FIG. 3. In the case in which the metal fiber bundle 12 is passed through the spur gear 11 as illustrated in FIG. 1, the concave-convex patterns illustrated in FIGS. 2B and 2C are formed on the metal fiber bundle. That is, as illustrated in FIG. 2B which shows the side sectional view of the metal fiber, the concave-convex patterns are formed vertically with respect to the longitudinal direction of the metal fiber. In the case in which the metal fiber bundle 32 is passed through the helical gear 31 as illustrated in FIG. 3, the concave-convex patterns illustrated in FIGS. 4B and 4C are formed on the metal fiber bundle. That is, as illustrated in FIG. 4B which shows the side sectional view of the metal fiber, the concave-convex patterns are formed inclined with respect to vertical line to the longitudinal direction of the metal fiber.

In the metal fiber having the concave-convex patterns according to the embodiment, the concave-convex patterns may be different depending on the tooth shape of the gear through which the metal fiber is passed. The shapes of the concave-convex patterns are not specially limited. For example, the concave-convex patterns may have a V-shape, a U-shape, or a U-shape.

The concave-convex patterns may be formed on a metal fiber which is generally known to those skilled in the art, and/or a metal fiber prepared by a method which is generally known to those skilled in the art. In one embodiment, examples of the metal fiber include a metal fiber made of a Fecralloy which is a Fe-Cr-Al alloy. Fecralloy is a generally-known alloy. For example, Fecralloy may include 18-27wt% of chromium (Cr), 3-7wt% of aluminum (Al), specifically 5-7wt%, and the remaining wt% of iron (Fe). Also, an improved Fecralloy which further includes 0.05-0.5wt% of zirconium (Zr) and/or yttrium (Y), specifically 0.1-0.3wt%, may be used. In another embodiment, examples of the metal fiber include a stainless steel metal fiber, specifically, a stainless steel 316L metal fiber.

The concave-convex patterns may be formed on a metal fiber prepared by a cutting process, a drawing process, or a melt extraction process.

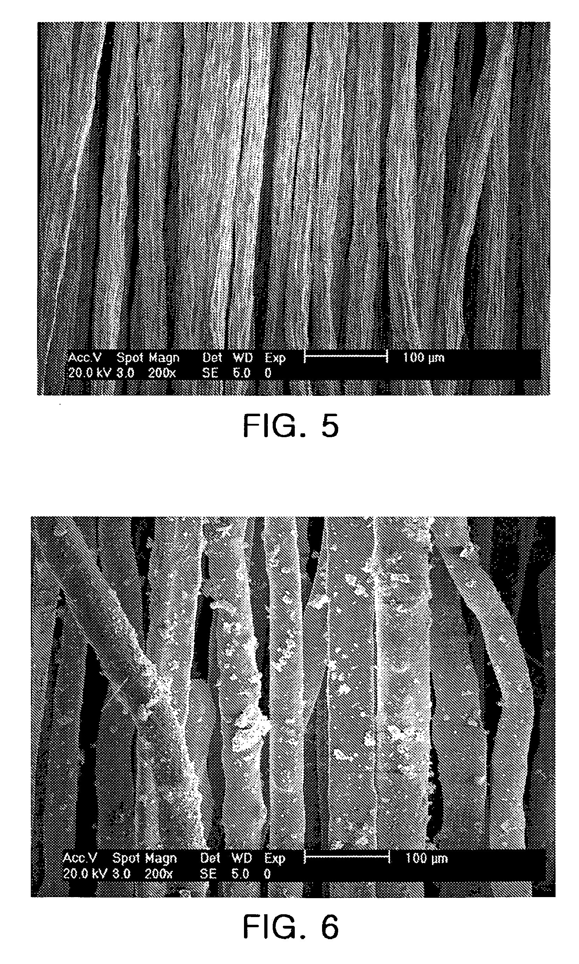

As illustrated in FIG. 5, the surfaces of the metal fibers prepared by the machining process such as the cutting process or the drawing process are smooth and without protrusions. Since there is no frictional force between the metal fibers having the smooth surfaces, it is difficult to prepare a yarn from such metal fibers.

Furthermore, as illustrated in FIG. 6, a plurality of protrusions having a height of several micrometers, specifically 1-5μm, are formed on the surfaces of the metal fibers prepared by the melt extraction process. However, since the frictional force between the metal fibers is insufficient, the metal fibers may be released from the metal fiber yarn. Meanwhile, in the case in which the metal fiber yarn is prepared using the metal fibers manufactured by the melt extraction process, the frictional force between the metal fibers is insufficient. Hence, a single strand of the yarn must be prepared from a relatively large number of metal fibers such as 50-100 strands of metal fibers. Even in this case, the metal fibers are released from the metal fiber yarn, and the form of the metal fiber yarn is not maintained.

However, according to the embodiment, since the concave-convex patterns are formed on the metal fibers, sufficient friction force and entanglement are provided between the metal fibers prepared by the machining process such as the cutting process or the drawing process and the metal fibers prepared by the melt extraction process. Hence, such metal fibers may be easily processed into the metal fiber yarn, and the metal fibers will not be released from the metal fiber yarn. The number of metal fibers used for forming a single strand of the yarn is not limited. Specifically, the yarn, including any number of metal fibers such as an example, about 10-250 strands or more of metal fiber, may be easily prepared. Furthermore, the metal fiber yarn may be prepared without using an additional binder and/or polymer.

Moreover, the metal fiber yarn prepared from the metal fibers according to the embodiment ensures excellent and high porosity because of the concave-convex patterns formed on the metal fibers, and a plurality of very fine and uniform pores are formed in the metal fiber yarn and fabric.

According to the conventional art, the diameter and length of the metal fibers usable when preparing the metal fiber yarn are limited due to weak frictional force, entanglement and processability (specifically, processability of the metal fibers to the metal fiber yarn).

The conventional metal fiber yarn has been prepared using the metal fibers having a diameter of 10 μm -100μm, specifically 30 μm -100μm, and a length of 10 cm -100cm. However, since the metal fibers according to the embodiment have the concave-convex patterns, the frictional force between the metal fibers, the entanglement and the processability are increased. Hence, there is no specific limitation on the diameter and length of the metal fibers usable when preparing the metal fiber yarn. That is, the metal fiber yarn may be easily prepared using metal fibers having a diameter of less than 10μm and metal fibers having a diameter of more than 100μm, as well as metal fibers having a diameter of 10 μm -100μm. Also, the metal fiber yarn may be easily prepared using metal fibers having a length of less than 10cm and metal fibers having a length of more than 100cm, as well as the metal fibers having a length of 10 cm -100cm.

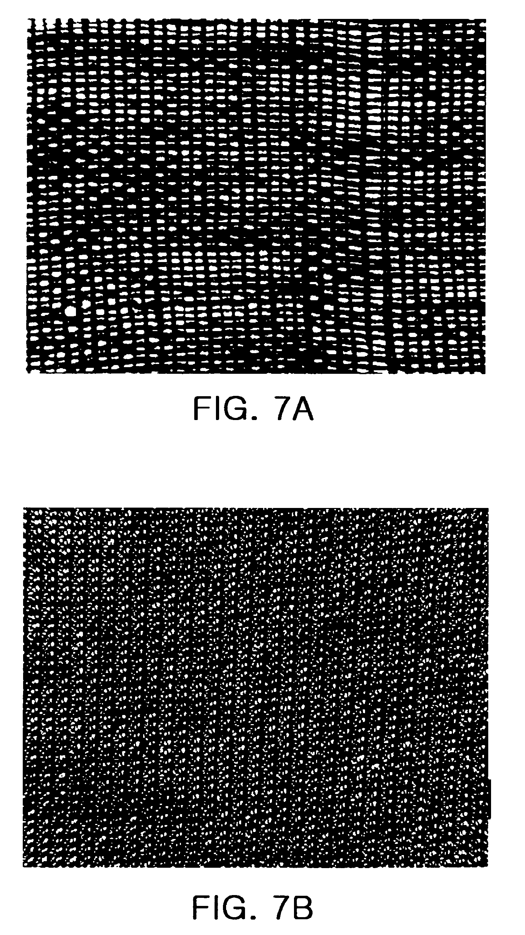

In order to form the plurality of excellent, fine and uniform pores in the metal fiber yarn and the fabric prepared from the same, yarn including a large number of thin metal fibers is preferred to yarn including a small number of thick metal fibers under the condition of the same equivalent diameter. For example, in order to form the plurality of fine and uniform pores in the manufacturing of the fabric, yarn having 200 strands of fibers having a diameter of $20\mu$m (yarn diameter: about 0.1mm, FIG. 7B) is preferred to yarn having 100 strands of fibers having a diameter of $30\mu$m (yarn diameter: about 0.1mm, FIG. 7A).

Moreover, the metal fibers according to the embodiment have excellent elasticity because of the concave-convex patterns formed on the metal fibers. Due to the elasticity thereof, the metal fibers may be easily processed into the metal fiber yarn and the metal fabric using the same, and the metal fibers may be freely modified in various shapes. Also, the metal fiber yarn and the metal fabric using the same have a soft texture.

The metal fibers having the concave-convex patterns according to the embodiment may be drawn and twisted to prepare the metal fiber yarn. Meanwhile, since the conventional metal fiber yarn has insufficient frictional force and entanglement between the metal fibers, it is not processed into a false twist yarn, but into a twisting yarn. However, the metal fibers having the concave-convex patterns according to the embodiment can be processed into a false twist yarn as well as a twisting yarn because of the increased frictional force and entanglement between the metal fibers. In the case of the twisting yarn and the false twist yarn prepared from the metal fibers according to the embodiment, metal fibers are not released, thereby stably maintaining the form of the yarn.

According to the embodiment, since the frictional force between the metal fibers is improved, the metal fibers have excellent entanglement. Thus, when preparing the yarn, the torsion rate is not specifically limited. Meanwhile, as is well known to those skilled in the art, the false twist yarn is prepared by drawing and twisting the metal fibers to manufacture the metal fiber yarn and untwisting the metal fiber yarn.

As described above, when preparing the metal fiber yarn according to the embodiment, the torsion rate of the metal fiber is not specially limited. The metal fibers may be twisted to have a porosity and pore distribution suitable for the purpose of the metal fiber fabric prepared from the metal fiber yarn.

As one example, in the case in which the metal fiber fabric used as a burner material is prepared using the metal fiber yarn, the metal fiber yarn including the metal fibers according to the embodiment may be processed into a false twist yarn or a twisting yarn, considering the ejection of a gas fuel at pores between the metal fibers, differential pressure, and combustion efficiency. The yarn may be prepared by twisting the metal fibers, e.g., at 3-5 turns/m.

As another example, in the case in which the metal fiber fabric used as a filter material is prepared from the metal fiber yarn, the metal fiber yarn including the metal fibers according to the embodiment may be processed into a false twist yarn or a twisting yarn, considering the filtration performance of dust particle/foreign object of the metal fiber fabric and the increase in differential pressure due to the accumulation of dust particles or foreign objects at pores. The yarn may be prepared by twisting the metal fibers, e.g., at 1-15 turns/m, preferably 10-15 turns/m.

As the pores of the metal fiber yarn and/or the fabric are smaller, the fine dust particle/foreign object filtration performance and the combustion efficiency are improved. However, as dust particles and/or foreign objects are accumulated, the differential pressure and the differential pressure rise rate are increased. Thus, in order to obtain excellent filtration performance and combustion efficiency and minimize the differential pressure rise rate, the metal fibers may be processed into a twisting yarn by applying the torsion rate within the above-described range or a false twist yarn according to the intended use of the metal fabric, specifically, the intended use of the metal fabric as a burner material and/or a filter material.

The metal fiber yarn according to the embodiment may have a length of 0.45-10.0 m per gram (0.45-10.0 Nm). When the length of the yarn per gram is less than 0.45 m, the yarn becomes thick and thus it is not suitable in view of porosity. When the length of the yarn per gram is more than 10.0 m, the yarn is not prepared.

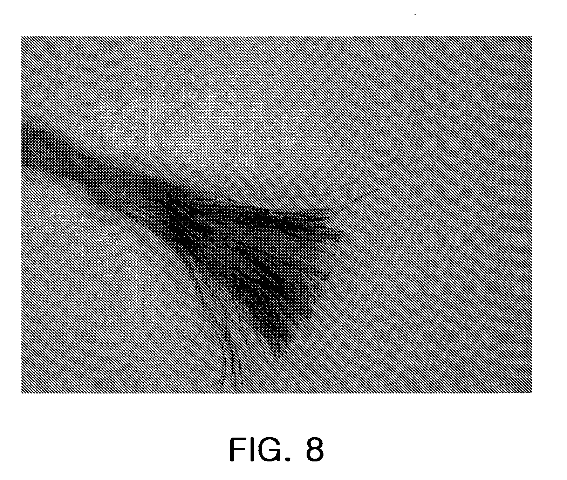

FIG. 8 illustrates a metal fiber yarn 81 including a plurality of metal fibers 82 according to an embodiment. The metal fiber yarn according to the embodiment may be prepared by continuing to finely draw and twist the metal fibers in which the concave-convex patterns are formed. Meanwhile, the false twist yarn is prepared by drawing and twisting the metal fibers and untwisting the twisted metal fibers.

In the metal fiber yarn 81 of FIG. 8 prepared from the metal fibers 82 in which the concave-convex patterns are formed, the metal fibers 82 are well entangled together due to the concave-convex patterns. Also, since the frictional force between the metal fibers is increased due to the concave-convex patterns, metal fibers are not released from the yarn, thereby stably maintaining the form of the yarn. Furthermore, due to the concave-convex patterns of the metal fibers constituting the yarn, a plurality of fine and uniform pores are formed between the metal fibers, thereby providing the excellent and high porosity. Moreover, the metal fibers having the concave-convex patterns according to the embodiment may be easily processed in a subsequent process and have soft texture.

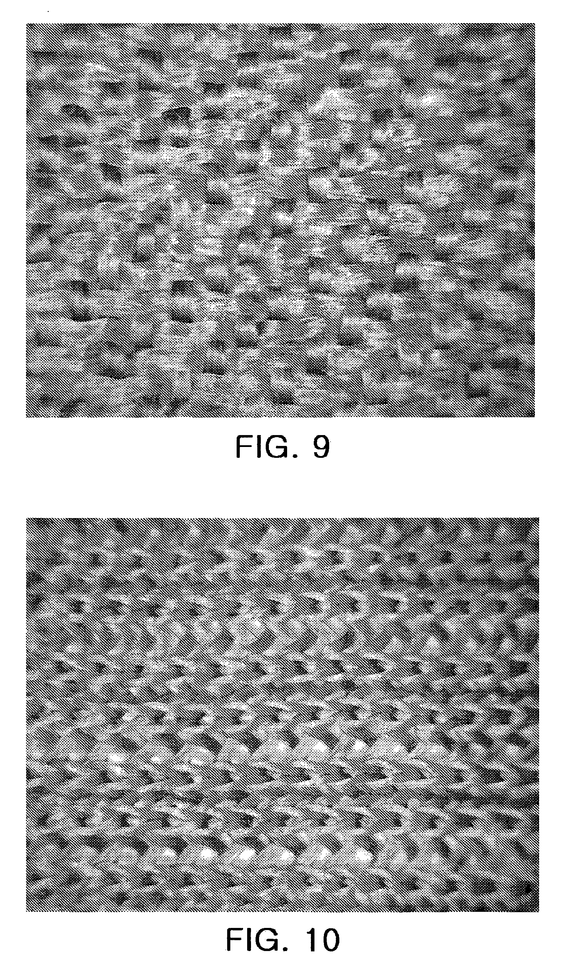

Meanwhile, the metal fiber yarn according to the embodiment may be woven into a fabric by a general method which is known to those skilled in the art. As one example, a photo of a fabric prepared by a weaving process and a fabric prepared by a knitting process are illustrated in FIGS. 9 and 10, respectively.

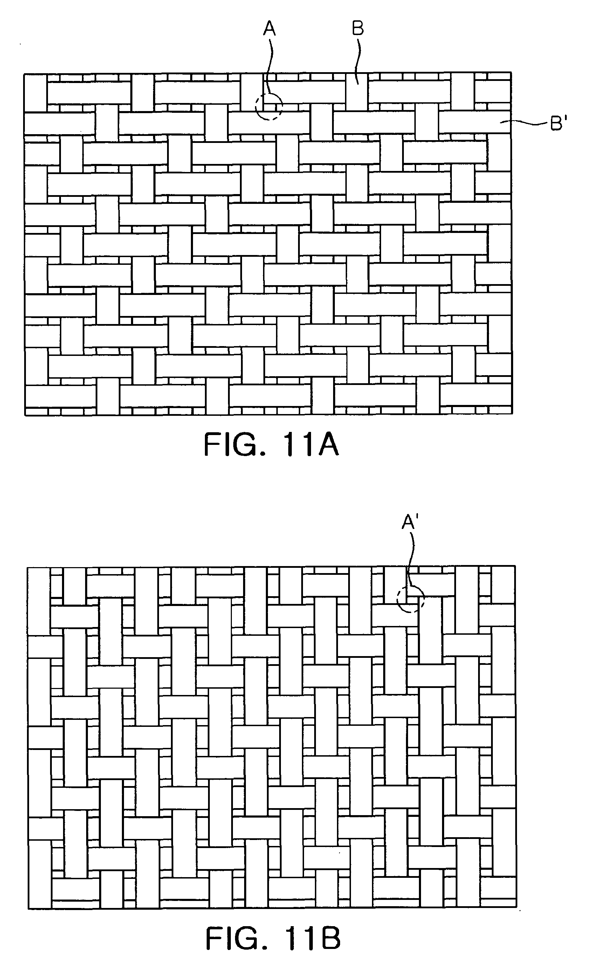

As one specific example, although not being limited thereto, the fabric according to the embodiment may be prepared from the metal fiber yarn by substantially weaving warp yarn B and weft yarn B' at right angles with relation to one another as illustrated in FIGS. 11A and 11B. The metal fiber fabric may include the metal fiber yarn having 5-30 strands per 2.54 cm. When the number of the metal fiber yarn in the metal fabric is less than 5 strands/2.54 cm, the pore of the fabric is too large, especially when the yarn diameter is small. When the number of the metal fiber yarn is more than 30 strands/2.54cm, the pore is clogged, especially when the yarn diameter is large.

In weaving, the weft yarns and the warp yarns are disposed to be substantially vertical to one another, and flame holes A and A' having sides defined by two parallel warps and two parallel wefts are formed on both sides of the fabric. The flame holes refer to parts which are slightly recessed from the bottom and top of the fabric. The aspect ratio of the flame hole (i.e. the ratio of width : length) is 10:1 or less, specifically, 1:1 to 10:1. When the aspect ratio of the flame hole exceeds 10, the flame hole is formed through the lower yarn of 3-4 strands. Consequently, the structure of the fabric becomes loose. Meanwhile, only if the porosity is not problematic, the fabric may be prepared to have the flame holes whose aspect ratio is 10:1 or less.

As described above, since the metal fiber yarn is prepared using the metal fibers having the concave-convex patterns, there is no limitation on the thickness and/or the length of the metal fiber used in preparing the metal fiber yarn. Hence, metal fibers thinner than the metal fibers which is conventionally used in preparing the conventional metal fiber yarn may be used. Furthermore, metal fiber yarn having a stable form may be prepared, even though a smaller number of metal fibers are used. As such, since the metal fiber yarn is prepared from a small number of metal fibers and/or thin metal fibers, a metal fiber fabric having a low density may be prepared as compared with the conventional art.

In particular, in the case in which the low-density metal fiber fabric is used as a burner material, it has an advantage in that super low load combustion is possible. For example, the density of the fabric may be 4.0kg/m$^2$ or less, specifically, 0.1-4.0kg/m$^2$. In the case in which the fabric is used as a burner material or a filter material, the lower density of the fabric is favorable in view of the reduction in differential pressure. Therefore, even though the lower limit value for the density of the fabric is not specially limited, if the density of the fabric is less than 0.1kg/m$^2$, the interval between the metal fiber yarns constituting the fabric is so wide that the smooth combustion or the dust filtration performance is insufficient. In this regard, it is suitable that the density of the fabric is 0.1kg/m$^2$ or more. Meanwhile, if the density of the fabric exceeds 4.0kg/m$^2$, the interval between the metal fiber yarns is so narrow that the porosity is lowered and the differential pressure is increased. Thus, it is unsuitable in view of the ejection of fuel gas and the filtration performance. The fabric prepared to have a density of 0.1-4.0kg/m$^2$ has a thickness of 0.3-2.5mm. The porosity of the fabric is 75-95%.

The woven or knitted fabric according to the embodiment of the present invention may be used as a filter material and/or a burner material, specifically, as a membrane for a surface combustion burner, a pre-filter for water treatment, and a particulate filter.

Meanwhile, in the case in which the conventional metal fiber fabric is used as a burner material or a filter material, metal meshes are attached to both sides of the metal fiber fabric and then the metal fiber fabric to which the metal meshes are attached is processed, e.g., in a wrinkled shape. However, if the metal meshes attached to both sides of the metal fiber fabric are processed in a fabric form, they are easily damaged.

Therefore, in preparing the metal fiber fabric according to the embodiment, metal wires are used instead of the metal fiber yarns used as the warp yarns and/or the weft yarns. The metal fiber yarns and the metal wires may be woven together to prepare the metal fiber fabric including the metal wires. The metal wires may be used as warps and/or wefts. That is, the woven fabric according to the embodiment of the present invention may be prepared from the metal fiber yarns and the metal wires by using the metal wires as at least one warp, at least one weft, or both of at least one warp and at least one weft among the plurality of warps and wefts. The number of the metal wires usable in preparing the metal fiber fabric is not specially limited. The metal wires may be used at any position of the warps and/or the wefts, at any interval, and/or in any number, considering the physical properties required when used as the burner material or the filter material, for example, combustion performance, filtration performance, and strength. The metal wire which is made of the same kinds of metal with the metal fiber yarn can be used.

Also, the metal wire having a diameter of 0.07 mm to 3mm may be used. If the diameter of the metal wire is less than 0.07mm, the metal wire is thin and thus the tensile strength is weak. In this regard, it is unfavorable because there is no great difference from the metal fiber. If the diameter of the metal wire exceeds 3mm, the metal wire is too thick. Hence, in the case in which the metal fiber fabric including the metal wires is used as the burner material, thermal deformation occurs at high temperature.

The metal fiber woven or knitted fabric prepared using the metal wires includes the metal wires therein. Thus, when the metal fiber fabric is used as a burner material or a filter material, no additional metal meshes are required as compared with the conventional art. Hence, when transforming the metal fiber fabric into the burner material or the filter material, there is no concern about damage to the material due to damage to the metal meshes, thereby improving the moldability into the material. Moreover, the metal wires inside the metal fiber fabric improve its strength, and the dense pores formed inside the metal fiber fabric by the metal wires further improve the combustion efficiency of the burner material and the filtration efficiency of the filter material.

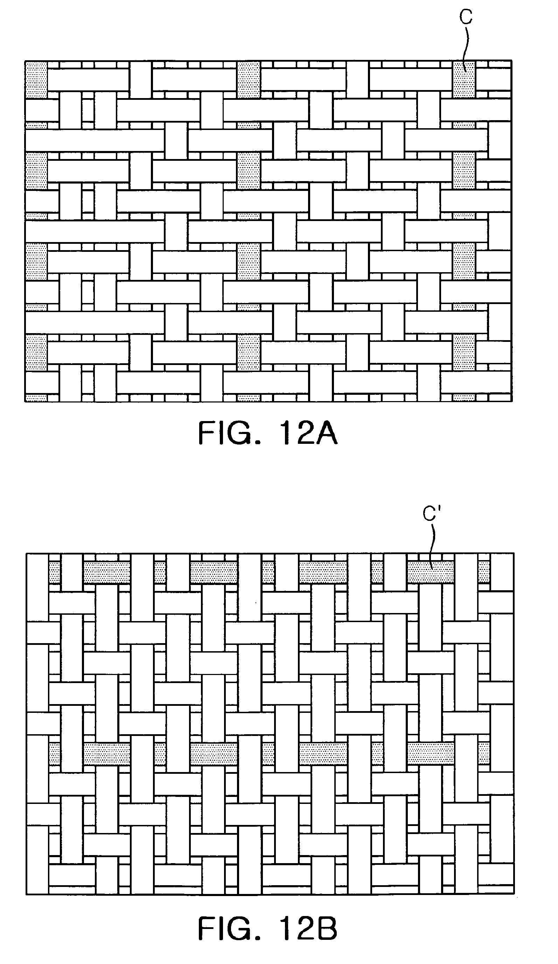

Meanwhile, FIG. 12A illustrates a fabric prepared using metal wires as warps C instead of metal fiber yarns, and FIG. 12B illustrates a fabric prepared using metal wires as wefts C' instead of metal fibers.

Since the metal fiber woven or knitted fabric prepared from the yarn including the metal fibers having the concave-convex patterns according to the embodiment includes a plurality of uniform, regular and fine pores, it is suitable for a filter material for filtering fine dust particles and/or foreign objects. Also, since a fuel is finely and regularly ejected through the fine pores, a gas flow rate may be increased between the metal fibers, even in the case that a small amount of fuel is supplied. In this regard, the metal fiber fabric is suitable for the burner material because the fuel is stably burnt. Furthermore, since the fine pores between the metal fibers on which the concave-convex patterns are formed serve as fine flame holes, a wide combustion characteristic is exhibited throughout the high-load and low-load areas, and a more excellent heating effect is exhibited by the uniform flame distribution and the flame splitting effect. Moreover, improved differential pressure performance (reduced differential pressure) is exhibited.

Hereinafter, embodiments of the present invention will be described in detail. It should be noted that the following embodiments are only to aid in understanding the present invention.

Embodiment 1: Preparation and evaluation of yarn using metal fibers prepared by cutting process

A bundle of metal fibers (length: 40cm) having diameters listed in Table 2 below were prepared in a cutting process. Then, by passing the bundle of metal fibers through the spur gear 11 of FIG. 1 or the helical gear 31 of FIG. 3, the V-shaped concave-convex patterns illustrated in FIG. 2C or 4C were formed on the metal fibers at intervals listed in Table 2 below. The metal fiber included 22wt% of chromium (Cr), 5.5wt% of aluminum (Al), and the remaining wt% of iron (Fe).

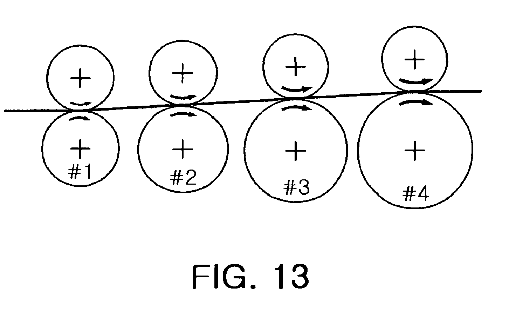

As illustrated in FIG. 13, the metal fibers of comparative examples 1 to 5 and the metal fibers of embodiments 1 to 6 were drawn by passing them between rollers having different rotating speeds and having a comb shape on the surfaces thereof in a longitudinal direction of the metal fiber. Then, the drawn metal fibers were twisted to prepare yarns, one strand of which had the metal fiber strands and the number of turns listed in Table 2 below. The length of the prepared yarns was 0.55 m per gram. Meanwhile, the false twist yarn was prepared by twisting the metal fibers to manufacture a yarn and untwisting the yarn.

It was evaluated as to whether or not dimensional stability was maintained when metal fiber yarn of about 1m prepared in the above-described manner was pulled by a force of 1 kg.

Table 1

|  | Roller #1 | Roller #2 | Roller #3 | Roller #4 |
|---|---|---|---|---|
| Rotating speed (rpm) | 5.4 | 5.4 | 5.4 | 5.4 |
| Diameter (mm) | 80 | 90 | 100 | 110 |
| Surface speed (cm/min) | 135.7 | 152.6 | 179.0 | 196.9 |
| Elongation | 1.38 | | | |

Table 2

|  | Concave-convex pattern/ Interval (mm) | Gear type | Fiber diameter (μm) | Number of fibers/1 strand of yarn | Type of yarn/ number of turns (turns/m) | Dimensional stability of yarn |
|---|---|---|---|---|---|---|
| Comparative example 1 | None | - | 50 | 30 | Twisting yarn/ 5 | Not processed into yarn |
| Comparative example 2 | None | - | 50 | 80 | Twisting yarn/ 8 | Not processed into yarn |
| Comparative example 3 | None | - | 50 | 80 | False twist yarn/8 | Not processed into yarn |
| Comparative example 4 | V pattern/55 | Spur gear | 50 | 30 | Twisting yarn/ 8 | Metal fibers released from yarn |

7

(continued)

| | Concave-convex pattern/ Interval (mm) | Gear type | Fiber diameter (μm) | Number of fibers/1 strand of yarn | Type of yarn/ number of turns (turns/m) | Dimensional stability of yarn |
|---|---|---|---|---|---|---|
| example 1 | V pattern/10 | Spur gear | 50 | 30 | Twisting yarn/ 5 | No metal fibers released from yarn |
| example 2 | V pattern/10 | Helical gear | 50 | 30 | Twisting yarn/ 5 | No metal fibers released from yarn |
| example 3 | V pattern/30 | Spur gear | 50 | 30 | False twist yarn/5 | No metal fibers released from yarn |
| example 4 | V pattern/18 | Helical gear | 50 | 30 | Twisting yarn/ 3 | No metal fibers released from yarn |
| example 5 | V pattern/1.0 | Helical gear | 50 | 300 | Twisting yarn/ 5 | No metal fibers were released from yarn |
| example 6 | V pattern/0.3 | Spur gear | 50 | 20 | False twist yarn/3 | No metal fibers were released from yarn |
| Comparative example 5 | V pattern/0.2 | Spur gear | 50 | 30 | Twisting yarn/ 3 | Not drawn |

As shown in Table 2 above, in the case of using the metal fibers of comparative examples 1 to 3 in which no concave-convex patterns were formed, the frictional force and entanglement between the metal fibers were insufficient and thus the metal fibers were not made into the yarn. In the case of comparative example 4, the metal fibers were made into the yarn, but the frictional force and entanglement thereof were insufficient due to the concave-convex patterns formed at large intervals. As a result, when the metal fiber yarn was pulled, the metal fibers were released and thus the form of the metal fiber yarn was not maintained. In the case of comparative example 5, the drawing of the metal fibers was impossible due to the concave-convex patterns which were densely formed on the metal fibers. As a result, the metal fibers were not processed into the yarn. In the case of examples 1 to 6, the metal fibers were processed into yarn and false twist yarn. Also, the metal fibers were not released from the prepared yarn.

Embodiment 2: Preparation and evaluation of yarn using metal fibers prepared by drawing process

A bundle of metal fibers (length: 100cm) having diameters listed in Table 3 below were prepared in a drawing process. Then, by passing the bundle of metal fibers through the spur gear 11 of FIG. 1 or the helical gear 31 of FIG. 3, the V-shaped concave-convex patterns illustrated in FIG. 2C or 4C were formed on the metal fibers at intervals listed in Table 3 below. The metal fiber included 22wt% of chromium (Cr), 5.5wt% of aluminum (Al), and the remaining wt% of iron (Fe).

The metal fiber yarns meeting the conditions of Table 3 below were prepared using the metal fibers of comparative examples 6 to 10 and the metal fibers of examples 7 to 12 in the same manner as the embodiment 1. Then, the dimensional stability of the prepared metal fiber yarns was evaluated. The length of the yarns was 1.1 m per gram.

Table 3

| | Concave-convex pattern/ Interval (mm) | Gear type | Fiber diameter (μm) | Number of fibers/1 strand of yarn | Type of yarn/ number of turns (turns/m) | Dimensional stability of yarn |
|---|---|---|---|---|---|---|
| Comparative example 6 | None | - | 20 | 60 | Twisting yarn/ 5 | Not processed into yarn |
| Comparative example 7 | None | - | 30 | 50 | Twisting yarn/ 8 | Not processed into yarn |
| Comparative example 8 | None | - | 40 | 40 | False twist yarn/8 | Not processed into yarn |
| Comparative example 9 | V pattern/55 | Spur gear | 50 | 40 | Twisting yarn/ 8 | Metal fibers released from yarn |
| example 7 | V pattern/10 | Spur gear | 40 | 40 | False Twist yarn/3 | No metal fibers released from yarn |
| example 8 | V pattern/10 | Helical gear | 30 | 40 | Twisting yarn/ 3 | No metal fibers released from yarn |
| example 9 | V pattern/30 | Spur gear | 30 | 40 | Twisting yarn/ 5 | No metal fibers released from yarn |
| example 10 | V pattern/18 | Helical gear | 30 | 40 | Twisting yarn/ 1 | No metal fibers released from yarn |
| example 11 | V pattern/ 1.0 | Helical gear | 20 | 20 | False twist yarn/5 | No metal fibers released from yarn |
| example 12 | V pattern/ 0.3 | Helical gear | 30 | 40 | Twisting yarn/ 5 | No metal fibers released from yarn |
| Comparative example 10 | V pattern/ 0.2 | Spur gear | 20 | 30 | Twisting yarn/ 5 | Not drawn |

As shown in Table 3 above, in the case of using the metal fibers of comparative examples 6 to 8 in which no concave-convex patterns were formed, the frictional force and entanglement between the metal fibers were insufficient and thus the metal fibers were not processed into yarn. In the case of comparative example 9, the metal fibers were processed into yarn, but the frictional force and entanglement were insufficient due to the concave-convex patterns formed at large intervals. As a result, when the metal fiber yarn was pulled, the metal fibers were released and thus the form of the metal fiber yarn was not maintained. In the case of comparative example 10, the drawing of the metal fibers was impossible due to the concave-convex patterns which were densely formed on the metal fibers. As a result, the metal fibers were not processed into yarn. In the case of examples 7 to 12, the metal fibers were processed into yarn and false twist yarn. Also, the metal fibers were not released from the prepared yarn.

Embodiment 3: Preparation and evaluation of yarn using metal fibers prepared by melt extraction process

A bundle of metal fibers (length: 10-18cm) having diameters listed in Table 4 below were prepared in a melt extraction process. Then, by passing the bundle of metal fibers through the spur gear 11 of FIG. 1 or the helical gear 31 of FIG. 3, the V-shaped concave-convex patterns illustrated in FIG. 2C or 4C were formed on the metal fibers at intervals listed in Table 4 below. The metal fiber included 22wt% of chromium (Cr), 5.5wt% of aluminum (Al), and the remaining wt% of iron (Fe).

The metal fiber yarns meeting the conditions of Table 4 below were prepared using the metal fibers of comparative examples 11 to 15 and the metal fibers of examples 13 to 18 in the same manner as the embodiment 1. Then, the dimensional stability of the prepared metal fiber yarns was evaluated. The length of the yarns was 0.55 m per gram.

Table 4

|  | Concave-convex pattern/ Interval (mm) | Gear type | Fiber diameter (μm) | Number of fibers/1 strand of yarn | Type of yarn/ number of turns (turns/m) | Dimensional stability of yarn |
|---|---|---|---|---|---|---|
| Comparative example 11 | None | - | 30 | 50 | Twisting yarn/ 9 | Metal fibers released from yarn |
| Comparative example 12 | None | - | 30 | 40 | Twisting yarn/ 5 | Metal fibers released from yarn |
| Comparative example 13 | None | - | 30 | 30 | Twisting yarn/ 8 | Metal fibers released from yarn |
| Comparative example 14 | V pattern/55 | Spur gear | 30 | 40 | Twisting yarn/ 8 | Metal fibers released from yarn |
| example 13 | V pattern/10 | Spur gear | 30 | 40 | Twisting yarn/ 8 | No metal fibers released from yarn |
| example 14 | V pattern/10 | Helical gear | 30 | 40 | Twisting yarn/ 3 | No metal fibers released from yarn |
| example 15 | V pattern/30 | Spur gear | 30 | 40 | Twisting yarn/ 5 | No metal fibers released from yarn |
| example 16 | V pattern/18 | Helical gear | 30 | 40 | Twisting yarn/ 7 | No metal fibers released from yarn |
| example 17 | V pattern/1.0 | Helical gear | 30 | 30 | False twist yarn/5 | No metal fibers were released from yarn |
| example 18 | V pattern/0.3 | Spur gear | 30 | 30 | False twist yarn/3 | No metal fibers were released from yarn |
| Comparative example 15 | V pattern/0.2 | Spur gear | 30 | 30 | False twist yarn/3 | Not drawn |

As shown in Table 4 above, in the case of using the metal fibers of comparative examples 11 to 13 in which no concave-convex patterns were formed, the frictional force and entanglement between the metal fibers were insufficient. As a result, when the metal fiber yarn was pulled, the metal fibers were released and thus the form of the metal fiber yarn was not maintained. In the case of comparative example 15, the drawing of the metal fibers was impossible due to the concave-convex patterns which were densely formed on the metal fibers. As a result, the metal fibers were not processed into the yarn. In the case of examples 13 to 18, the metal fibers were processed into yarn and false twist yarn. Also, the metal fibers were not released from the prepared yarn.

Embodiment 4: Air permeability of fabric

(Performance evaluation of differential pressure)

Three fabric samples illustrated in FIG. 9 and FIG. 11 were woven by using the yarn of example 12 and the yarn of comparative example 12 as the warp yarn and the weft yarn, respectively. The density of the fabric was 1.5kg/m$^2$, and the thickness of the fabric was 1.5mm. As illustrated in FIGS. 11A and 11B, flame holes having an aspect ratio (i.e. the ratio of width : length) of 5:1 were formed on both sides of the fabric. The number of the yarns used as the warp yarn and the weft yarn was 20 per inch in the width and length of the fabric, and the porosity of the fabric was 90%.

The minimum pore diameter and the average pore diameter of the fabric were measured using a porosimeter and shown in Table 5 below. Also, the air permeability of each fabric was measured using the KS K 0570-1997 Frazier method and its average was shown in Table 6 below.

Table 5 Pore Size of Fabric Sample

| | | Fabric 1 | Fabric 2 | Fabric 3 | Average |
|---|---|---|---|---|---|
| fabric (prepared from yarn of example 12) | Minimum pore diameter ($\mu$m) | 31.70 | 13.77 | 41.07 | 28.85 |
| | Average pore diameter ($\mu$m) | 44.06 | 49.88 | 41.47 | 45.14 |
| Comparative fabric (prepared from yarn of comparative example 12) | Minimum pore diameter ($\mu$m) | 22.56 | 61.98 | 36.46 | 40.33 |
| | Average pore diameter ($\mu$m) | 51.08 | 64.60 | 53.15 | 56.28 |

Table 6 Air Permeability

| | fabric | Comparative fabric |
|---|---|---|
| Air permeability (cc/min/cm$^2$) | 109.86 | 54.48 |

As shown in Tables 5 and 6 above, the minimum pore diameter and the average pore diameter of the fabric were smaller than those of the comparative fabric. It can be seen that the metal fiber fabric having finer pores were prepared by using the metal fiber yarn having the metal fibers with the concave-convex patterns according to the embodiment. Meanwhile, the fabric had two times the air permeability of the comparative fabric. Hence, it could be confirmed that fine pores were formed in the fabric which was prepared from the metal fiber yarn having the concave-convex pattern according to the embodiment, and the air permeability was improved (that is, a small differential pressure was applied).

Embodiment 5: Evaluation of combustion efficiency when fabric is used as burner material

The yarns prepared in example 12 and comparative example 12 were woven to prepare the fabrics of FIGS. 9 and 11 which have the density of 1.5kg/m$^2$ and the thickness of 1.5mm. As illustrated in FIGS. 11A and 11B, flame holes having an aspect ratio (i.e. ratio of width : length) of 5:1 were formed on both sides of the fabric. The number of the yarns used as the warps and the wefts was 20 per inch in the width and length of the fabric, and the porosity of the fabric was 90%.

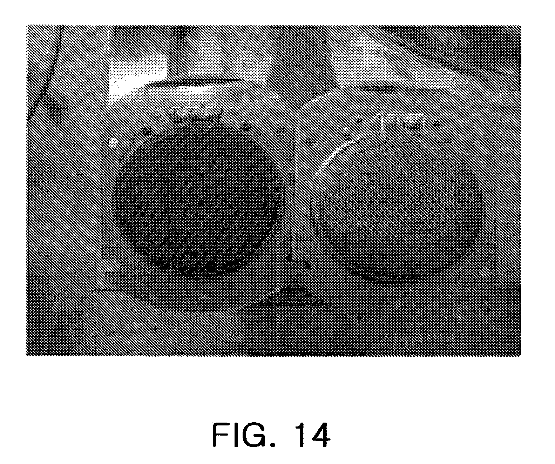

The combustion efficiency was evaluated when the prepared fabrics were used as a membrane in a combustion burner. FIG. 14 is a picture of an fabric prepared from the yarn of example 1 (hereinafter, referred to as fabric 1) and a comparative fabric prepared from the yarn of comparative example 12 (hereinafter, referred to as a comparative fabric 1) which were applied as a membrane in a surface combustion burner.

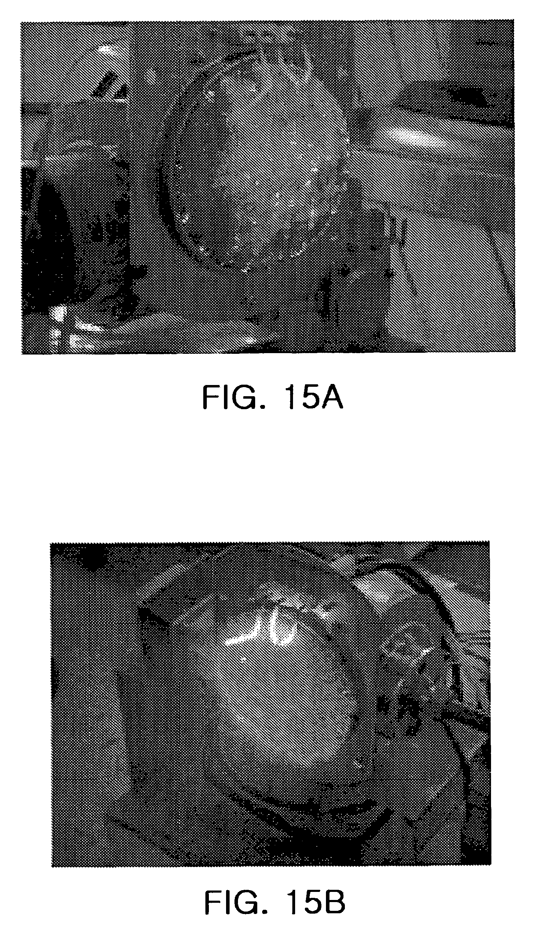

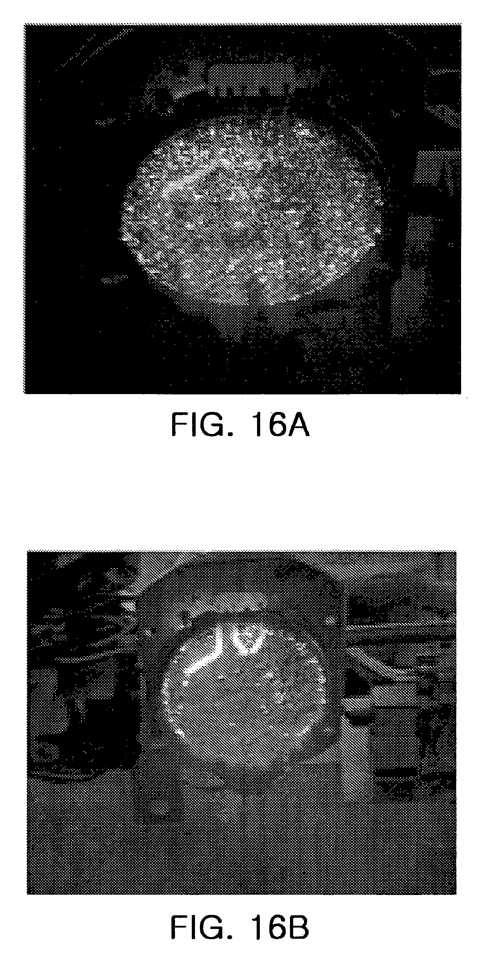

A mixture gas of air and fuel gas was injected into the respective fabrics and burnt while changing the mixture ratio thereof to a value of $\lambda$ which is defined as a ratio of air/fuel gas. First, a mixture gas of air and fuel gas was burnt while changing the mixture ratio $\lambda$ thereof to 1.05, 1.25, and 1.42. In this case, the lowest heating value of the fabric 1 prepared from the yarn of example 12 was 300 kW/m$^2$ (FIG. 15A), and the lowest heating value of the comparative fabric 1 prepared from the yarn of comparative example 12 was 418 kW/m$^2$ (FIG. 16A).

Meanwhile, in the case in which the mixture gas of fuel gas and air was burnt while changing its mixture ratio $\lambda$ to 1.03, 1.22, 1.41, and 1.69, the highest heating value of the fabric 1 was 1,500 kW/m$^2$ (FIG. 15B), and the highest heating value of the comparative fabric 1 was 1,063 kW/m$^2$ (FIG. 16B).

In the case in which the fabric 1 prepared from the yarn of example 12 was used as a membrane for a surface combustion burner, a lowest combustion load : highest combustion load ratio was 1:5. On the other hand, in the case in which the comparative fabric 1 prepared from the yarn of comparative example 12 was used as a membrane for a surface combustion burner, a lowest combustion load : highest combustion load ratio was 1:2.5. Consequently, the combustion load area of the fabric 1 was two times wider than the combustion load area of the comparative fabric 1. It could be confirmed that the fabric prepared from the yarn including the metal fibers with the concave-convex patterns exhibited the excellent combustion efficiency due to the plurality of fine and uniform pores formed by the concave-convex patterns of the fibers.

Embodiment 6: Evaluation of fabric used as filter material

In this embodiment, The strengths of the fabric 1 which is described in the embodiment 5 prepared by using yarns of example 12 as the weft yarns and the warp yarns; fabric 2 which was prepared using the yarn of the yarn 12 and the metal wire having a diameter of 0.2mm as the wefts and the warps, respectively (the fabric prepared using 20-strand yarns per 1 inch of the fabric as the weft yarn and 8-strand metal wires per 1 inch of the fabric as the warp) ; the comparative fabric 1 which is described in the embodiment 5 prepared using the yarns of comparative example 12 as the weft yarns and the warp yarns; and a complex body, which manufactured by attaching the metal meshes to both sides of the fabric of the fabric 1 were measured and compared with one another.

The metal mesh (porosity: 75%, diameter: 0.2mm) included 22wt% of chromium (Cr), 5.5wt% of aluminum (Al), and the remaining wt% of iron (Fe). The metal wire also included 22wt% of chromium (Cr), 5.5wt% of aluminum (Al), and the remaining wt% of iron (Fe).

The strengths of the fabrics and the complex body were measured using the KS K 0520-1995 ravel strip method and shown in Table 7 below.

Table 7

|  | Tensile Strength(kgf/cm) | |
| --- | --- | --- |
| fabric 1 | Weft direction | 20 |
| | Warp direction | 21 |
| fabric 2 | Weft direction | 20 |
| | Warp direction | 250 |
| Comparative fabric 1 | Weft direction | 13.7 |
| | Warp direction | 16.6 |
| Complex body | Weft direction | 255 |
| | Warp direction | 263 |

As shown in Table 7 above, the fabric 1 prepared from the metal fiber yarn according to the embodiment exhibited more excellent tensile strength than that of the comparative fabric 1. Also, the fabric 2 prepared using the metal wires as the warp yarn exhibited the warp-direction tensile strength comparable to that of the complex body.

Meanwhile, when the fabric 1 and the comparative fabric 1 were cut with the diameter of 40mm and were used as filters, the collection efficiency of the fabrics was measured three times and the measurement results were shown in Table 8 below. When fume particles were injected into one side of the filter and a vacuum pump was operated, the fume particles were introduced through a connection pipe coupled to the filter and filtered by the filter. The remaining fume particles having passed through the filter were collected in a cassette disposed at the other side of the filter. The collection efficiency were calculated from the following equation and shown in Table 8 below.

$$\text{Collection Efficiency(\%)} = \frac{A}{A + B} \times 100$$

where,

A is weight of fume particles filtered by the filter

B is weight of fume particles passing through the filter

(Weight of fume particles collected in the cassette)

(That is, the sum of A and B is the weight of all fume particles injected into the filter)

Table 8

| No. | Comparative fabric 1 | fabric 1 |
| --- | --- | --- |
| 1 | 79.1 | 88.7 |

(continued)

| No. | Comparative fabric 1 | fabric 1 |
|---|---|---|
| 2 | 68.7 | 85.0 |
| 3 | 61.7 | 89.8 |
| Average | 69.83 | 87.8 |

As can be seen from Table 8 above, the fabric 1 exhibited more excellent collection efficiency than that of the comparative fabric 1.

As set forth above, according to exemplary embodiments, the metal fibers having the concave-convex patterns formed at regular intervals in the longitudinal direction exhibit the improved frictional force between the metal fibers, entanglement, and processability due to the concave-convex patterns on the metal fibers. In particular, the metal fibers exhibit the excellent processability as the metal fiber yarn. Therefore, due to the concave-convex patterns, the metal fiber according to the embodiment is well entangled with other metal fibers, and the entangled state between the metal fibers is maintained by the large frictional force between the metal fibers. Also, the fibers are not released from the metal fiber yarn. Therefore, in preparing the metal fiber yarn, no additional binder and/or polymer are/is required.

In addition, by forming the concave-convex patterns at regular intervals in the metal fibers prepared by the metal extraction process or the smooth metal fibers prepared by the machining process such as the cutting process or the drawing process, the metal fiber yarn may be easily prepared using those metal fibers.

Furthermore, the metal fiber having the concave-convex patterns according to the embodiment has excellent elasticity due to the concave-convex patterns. Due to the elasticity, the metal fiber yarn may be easily prepared and may be easily processed into the metal fabric. The metal fiber yarn may be processed into any type of fabric. The prepared metal fiber yarn and the metal fabric using the same have a soft texture.

Meanwhile, the metal fiber yarn including the metal fibers having the concave-convex patterns according to the embodiment maintains its form stably because metal fibers are not released. Also, the metal fiber yarn has a plurality of uniform and fine pores.

Moreover, due to the easy entanglement and large frictional force between the metal fibers having the concave-convex patterns, there is no limitation on the length and thickness of the metal fiber used in preparing the metal fiber yarn and/or the number of the metal fibers constituting one strand of the yarn. That is, the metal fiber yarn having excellent dimensional stability and air permeability may be prepared using the metal fibers having any length and/or thickness. Furthermore, one strand of the yarn may be formed with any number of metal fibers.

The fabric prepared from the metal fiber yarn according to the embodiment also has the more improved porosity. Therefore, when the fabric according to the embodiment is used as the filter material, finer dust particles and/or foreign objects may be effectively filtered. Also, when the fabric according to the embodiment is used as the burner material, the heating effect is improved by the excellent porosity of the fabric and the excellent flame splitting effect due to the plurality of fine and uniform pores, and the wide combustion area and the high combustion rate are exhibited. Moreover, the fabric according to the embodiment exhibits improved differential pressure performance.

**Claims**

1. A fabric prepared from a metal fiber yarn comprising a metal fiber having concave-convex patterns formed at intervals of 0.3-50mm in a longitudinal direction of the metal fiber and drawn and the metal fiber yarn has a length of 0.45-10.0 m per gram and wherein the fabric is woven or knitted.

2. The fabric of claim 1, wherein the fabric has a density of 0.1-4.0kg/m$^2$.

3. The fabric of claim 1, wherein the fabric comprises 5 to 30 strands of the metal fiber yarn as a warp and a weft per 2.54cm (1 inch) of the fabric

4. A woven fabric according to claim 1 comprising a metal wire and the metal fiber yarn comprising a metal fiber having concave-convex patterns formed at intervals of 0.3-50mm in a longitudinal direction of the metal fiber and drawn and the metal fiber yarn has a length of 0.45-10.0 m per gram, wherein the metal wire is used as at least one warp yarn, at least one weft yarn, or both of at least one warp yarn and at least one weft yarn among a plurality of warps and wefts.

**5.** The fabric of claim 4, wherein the metal wire has a diameter of 0.07 mm to 3mm.

**6.** The fabric of any of claims 1 to 5, wherein metal fiber yarn is twisted or false twisted.

**7.** A burner material comprising the fabric of any one of claims 1 to 6.

**8.** A filter material comprising the fabric of any one of claims 1 to 6.

**Patentansprüche**

**1.** Textilerzeugnis, hergestellt aus einem Metallfasergarn, das eine Metallfaser mit konkav-konvexen Mustern besitzt, die in Intervallen von 0,3 mm bis 50 mm in der Längsrichtung der Metallfaser ausgebildet und gezogen ist, wobei die Metallfaser eine Länge von 0,45 bis 10,0 Meter pro Gramm aufweist und wobei das Textilerzeugnis gewebt, gestrickt oder gewirkt ist.

**2.** Textilerzeugnis nach Anspruch 1,
wobei das Textilerzeugnis eine Dichte von 0,1 kg/m$^2$ bis 4,0 kg/m$^2$ besitzt.

**3.** Textilerzeugnis nach Anspruch 1,
wobei das Textilerzeugnis 5 bis 30 Einzelfäden des Metallfasergarns als Kette und Schuss pro 2,54 cm (1 inch) des Textilerzeugnisses aufweist.

**4.** Gewebtes Textilerzeugnis nach Anspruch 1,
das einen Metalldraht und das Metallfasergarn aufweist, welches eine Metallfaser mit konkav-konvexen Mustern besitzt, die in Intervallen von 0,3 mm bis 50 mm in der Längsrichtung der Metallfaser ausgebildet und gezogen ist, wobei das Metallfasergarn eine Länge von 0,45 bis 10,0 Meter pro Gramm aufweist, wobei der Metalldraht als mindestens ein Kettgarn, mindestens ein Schussgarn, oder für beide von mindestens einem Kettgarn und mindestens einem Schussgarn unter einer Vielzahl von Kettfäden und Schussfäden verwendet wird.

**5.** Textilerzeugnis nach Anspruch 4,
wobei der Metalldraht einen Durchmesser von 0,07 mm bis 3 mm aufweist.

**6.** Textilerzeugnis nach einem der Ansprüche 1 bis 5,
wobei das Metallfasergarn ein gezwirntes Garn oder ein Falschdrahtgarn ist.

**7.** Brennermaterial, das ein Textilerzeugnis nach einem der Ansprüche 1 bis 6 aufweist.

**8.** Filtermaterial, das ein Textilerzeugnis nach einem der Ansprüche 1 bis 6 aufweist.

**Revendications**

**1.** Tissu préparé à partir d'un fil de fibre métallique comprenant un fil métallique présentant des motifs concaves et convexes qui sont formés à des intervalles de 0,3 à 50 mm dans une direction longitudinale de la fibre métallique et qui sont étirés et le fil de fibre métallique ayant une longueur de 0,45 à 10,0 m par gramme et le tissu étant tissé ou tricoté.

**2.** Tissu selon la revendication 1, dans lequel le tissu a une densité de 0,1 à 4,0 kg/m$^2$.

**3.** Tissu selon la revendication 1, dans lequel le tissu comprend 5 à 30 brins du fil de fibre métallique en tant que chaîne et trame pour 2,54 cm (pouce) de tissu.

**4.** Tissu tissé selon la revendication 1 comprenant un fil métallique et le fil de fibre métallique comprenant une fibre métallique présentant des motifs concaves et convexes qui sont formés à des intervalles de 0,3 à 50 mm dans une direction longitudinale de la fibre métallique et qui sont étirés et le fil de fibre métallique ayant une longueur de 0,45 à 10,0 m par gramme, le fil métallique étant utilisé pour au moins un fil de chaîne, au moins un fil de trame, ou à la fois au moins un fil de chaîne et au moins un fil de trame parmi une pluralité de chaînes et de trames.

**5.** Tissu selon la revendication 4, dans lequel le fil métallique a un diamètre de 0,07 mm à 3 mm.

**6.** Tissu selon l'une quelconque des revendications 1 à 5, dans lequel le fil de fibre métallique présente une torsion ou une fausse torsion.

**7.** Matériau de brûleur comprenant le tissu selon l'une quelconque des revendications 1 à 6.

**8.** Matériau de filtre comprenant le tissu selon l'une des revendications 1 à 6.

DIRECTION OF
PROGRESS

FIG. 1

FIG. 2A

FIG. 2B

FIG. 2C

DIRECTION OF
PROGRESS

31

32

# FIG. 3

FIG. 4A

FIG. 4B

FIG. 4C

FIG. 5

FIG. 6

FIG. 7A

FIG. 7B

FIG. 8

FIG. 9

FIG. 10

FIG. 11A

FIG. 11B

C

FIG. 12A

C'

FIG. 12B

FIG. 13

FIG. 14

FIG. 15A

FIG. 15B

FIG. 16A

FIG. 16B

**REFERENCES CITED IN THE DESCRIPTION**

**Patent documents cited in the description**

- WO 01079759 A
- WO 9704152 A
- US 4930199 A
- US 5071713 A
- KR 613869